# FASCICULE DE BREVET EUROPEEN

(11) **EP 2 145 796 B1**
(45) Date de publication et mention de la délivrance du brevet: **05.09.2012**
(21) Numéro de dépôt: 09165582.9
(22) Date de dépôt: 15.07.2009
(51) Int. Cl.: B60R 13/02, B60Q 3/00, B60Q 3/02, B60Q 3/04, B60K 35/00

(54) **Panneau d'habillage intérieur pour véhicule automobile pourvu d'une zone rétroéclairée, de réalisation simplifiée**
Inneres Verkleidungspaneel für Kraftfahrzeug mit rückseitig beleuchteter Zone vereinfachter Ausführung
Internal cladding panel for an automobile equipped with a backlit area, with simplified production

(30) Priorité: 15.07.2008 FR 0854812
(43) Date de publication de la demande: 20.01.2010
(73) Titulaire: EUROSTYLE SYSTEMS, 36000 Châteauroux (FR)
(72) Inventeur: Richard, Murielle, 36230, Buxières d'aillac (FR); Fraudet, Sébastien, 36320, Villedieu sur Indre (FR); Tirlemont, Christophe, 36330, Le Poinconnet (FR)
(74) Mandataire: Berger, Helmut

(56) Documents cités:
- DE-A1-102005 025 555
- DE-U1- 29 808 949
- FR-A- 2 824 510
- FR-A- 2 877 896
- US-A1- 2002 101 738

## Description

L'invention concerne un panneau d'habillage intérieur pour véhicule automobile, pourvu d'une zone rétroéclairée.

Un panneau d'habillage de ce type, comprend généralement une couche de support rigide, un revêtement fixé sur la couche de support et définissant par sa face libre la face visible du panneau et un dispositif d'éclairage apte à éclairer une zone de l'envers de cette couche de support.

La couche de support et le revêtement d'un tel panneau sont constitués de matériaux aptes à laisser passer la lumière du dispositif d'éclairage de façon à ce que des motifs soient formés sur la face visible du panneau.

Le procédé de fabrication d'un panneau d'habillage de ce type consiste à fabriquer d'une part la couche de support rigide, à fabriquer d'autre part le revêtement, à appliquer sur le revêtement un adhésif, pour ensuite assembler le revêtement à la couche de support et enfin fixer un dispositif d'éclairage sur la couche de support.

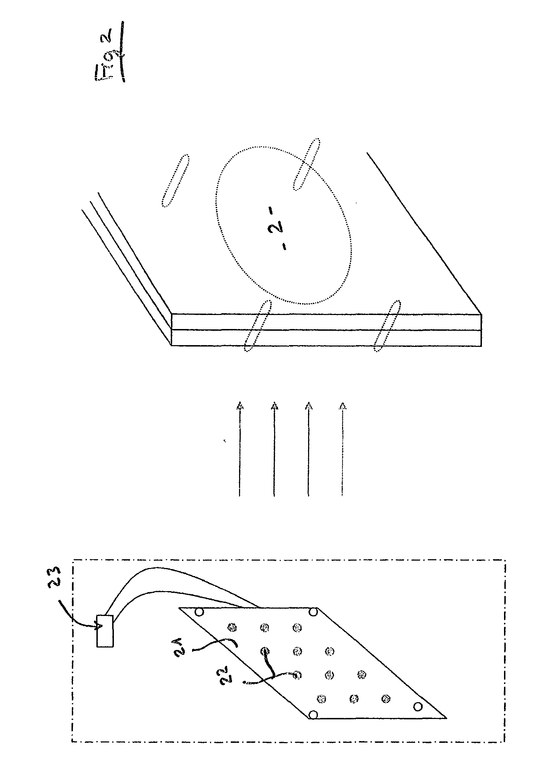

Le document FR- A -2877 896 décrit le panneau d'habillage pourvu d'une zone rétroéclairée du préambule de la revendication. En particulier la figure 2 divulgue un élément de garnissage sous forme de médaillon 5 comprenant une paroi avant 11 composée d'une pièce 12 en matériau translucide associé par colle translucide ou soudage à une partie de revêtement 3a prévue pour la diffusion de lumière provenant d'un guide de lumière 13 fixé par des clips à l'arrière de la paroi avant 11.

En conséquence, un procédé de ce type est long à mettre en oeuvre et n'atteint pas des cadences de production élevées.

Par ailleurs, l'apport d'un dispositif d'éclairage d'ambiance nécessite souvent des investissements spécifiques coûteux d'une part, impliquant une durée de développement assez longue d'autre part. Par ailleurs, certains dispositifs peuvent ne pas être intégrables sur un habillage déjà existant.

L'invention vise à pallier ces inconvénients.

A cet effet, l'invention concerne un panneau d'habillage intérieur pour véhicule automobile pourvu d'une zone rétroéclairée, comprenant une couche de support rigide et un revêtement fixé sur la couche de support et définissant par sa face libre, la face visible du panneau, le panneau comprenant un dispositif d'éclairage apte à éclairer une zone de l'envers de la couche de support, la couche de support et le revêtement étant aptes à laisser passer la lumière du dispositif d'éclairage de façon à ce que des motifs soient formés sur la face visible du panneau.

Selon l'invention, la couche de support est constituée en un matériau thermoplastique, et le revêtement comprend une couche de protection apte à protéger le revêtement de la couche de support dans des conditions de mise en forme industrielles, telles qu'une température élevée.

Selon une autre caractéristique, le revêtement comprend une couche d'aspect définissant la face visible du panneau et une couche formant barrière vis-à-vis du matériau plastique de la couche de support, fixée à l'envers de la couche d'aspect, cette couche formant barrière constituant la couche de protection.

Selon une autre caractéristique, la couche de protection comprend des zones opaques et des zones transparentes définissant les motifs formés sur la face visible du revêtement.

Selon encore une autre caractéristique, les zones opaques sont formées sur l'envers de la couche de protection par impression, telle que l'impression par sublimation thermique ou l'impression jet d'encre.

Dans ce cas, la couche de protection est un non tissé ou une maille.

De préférence, la couche de support comprend des zones opaques et des zones transparentes définissant les motifs formés sur la face visible du revêtement.

Dans ce cas, les zones opaques de la couche de support sont formées par application d'une peinture sur l'envers de cette couche de support.

Selon une autre possibilité, les zones opaques de la couche de support sont formées par application d'un masque définissant des formes complémentaires des motifs à former, sur l'envers de la couche de support.

Selon une autre caractéristique, le dispositif d'éclairage comprend au moins une source lumineuse fixée sur une embase, l'embase étant disposée de façon à diriger la majeure partie du flux lumineux de la source à travers la couche de support.

Dans ce cas, l'embase est disposée de façon à diriger l'ensemble du faisceau lumineux de la source à travers la couche de support.

Avantageusement, le dispositif d'éclairage comprend au moins une source lumineuse fixée sur une embase, l'embase étant disposée de façon à diriger la majeure partie du flux lumineux de la source le long de la couche de support.

De préférence, l'embase est disposée de façon à diriger l'ensemble du faisceau lumineux de la source le long de la couche de support.

Selon un mode de réalisation possible, la source émet un flux lumineux normal à l'embase.

Autrement, la source émet un flux lumineux parallèle à l'embase.

Avantageusement, le dispositif d'éclairage comprend une paroi de fixation de l'embase sur la couche de support.

Selon une autre caractéristique, la paroi de fixation fait partie d'un boîtier capturant les rayons lumineux perdus de la source.

Selon encore une autre caractéristique, les parois du boîtier sont constituées de mousse polyoléfine, polyuréthane ou de plastique.

Selon une variante de réalisation, l'embase du dispositif d'éclairage est fixée sur la couche de support.

L'invention concerne également le procédé de fabrication d'un panneau d'habillage intérieur pour véhicule automobile pourvu d'une zone rétroéclairée, comprenant une étape de fabrication d'un corps principal pour le panneau, pourvu d'une couche de support rigide et d'un revêtement fixé sur la couche de support et définissant par sa face libre, la face visible du panneau, et une étape d'assemblage du dispositif d'éclairage sur l'envers du corps principal, la couche de support et le revêtement étant aptes à laisser passer la lumière du dispositif d'éclairage de façon à ce que des motifs soient formés sur la face visible du revêtement.

Selon l'invention, la couche de support est constituée en un matériau thermoplastique, et le revêtement comprend une couche de protection apte à protéger le revêtement de la couche de support dans des conditions de mise en forme industrielles, telles qu'une température élevée, la fabrication du corps principal étant effectuée par un assemblage à chaud de la couche de support et du revêtement, tel que le moulage par injection ou la thermocompression.

Selon une autre caractéristique, la fabrication du revêtement comprend une étape d'assemblage d'une couche d'aspect définissant la face visible du panneau avec une couche formant barrière vis-à-vis du matériau plastique en fusion de la couche de support et constituant la couche de protection, telle qu'un non-tissé ou une maille, une étape d'introduction de ces couches assemblées au sein du moule à injection, et une étape d'injection de la matière thermoplastique constitutive de la couche de support sur l'envers de la couche de protection.

Avantageusement, la fabrication du revêtement comprend une étape de formation de zones opaques sur le revêtement.

Autrement, la fabrication de la couche de support comprend une étape de formation de zones opaques de préférence sur l'envers de cette couche de support.

L'invention sera maintenant décrite en référence aux figures annexées parmi lesquelles :

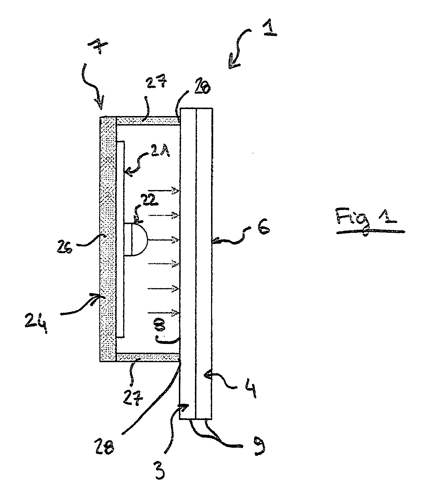

- la figure 1 représente un schéma de principe illustrant une coupe transversale d'un panneau d'habillage interne pour véhicule automobile selon l'invention,
- la figure 2 est une vue en perspective éclatée du schéma de principe de la figure 1,
- la figure 3 est une vue en perspective et partielle des couches de revêtement et de support du panneau de la figure 1,
- la figure 4 est une vue analogue à celle de la figure 1 et représentant un premier mode de réalisation d'éclairage direct pour le panneau selon l'invention,
- la figure 5 est une vue analogue à celle de la figure 4 pour un deuxième mode de réalisation d'éclairage direct selon l'invention,
- la figure 6 montre un mode de réalisation d'éclairage indirect pour le panneau selon l'invention.

L'invention concerne un panneau d'habillage intérieur pour véhicule automobile 1, pourvu d'une zone rétroéclairée, telle que représentée sur la figure 2 pour diffuser de la lumière au sein de l'habitacle du véhicule.

Ce panneau 1 comprend principalement une couche de support rigide 3, un revêtement 4 fixé sur une face de la couche de support et dont la face libre 6 définie la face visible du panneau 1, et un dispositif d'éclairage 7 qui est monté sur l'envers 8 de la couche de support 3.

La couche de support 3 et le revêtement 4 forment le corps principal 9 du panneau et sont constitués en des matériaux permettant de laisser passer la lumière du dispositif d'éclairage 7 dans leur épaisseur.

Typiquement, le matériau constitutif de la couche support est un matériau plastique transparent ou translucide, et le matériau constitutif du revêtement est un textile, un cuir ou un tissu ajouré, transparent ou semi transparent, avantageusement doublé d'une mousse 10 assurant le confort d'un utilisateur, et assez peu dense pour laisser également passer la lumière.

En outre, la couche de support et/ou le revêtement 4 présentent des propriétés leur permettant de définir une fois traversés par la lumière du dispositif d'éclairage 7, des motifs sur la face visible du revêtement 4.

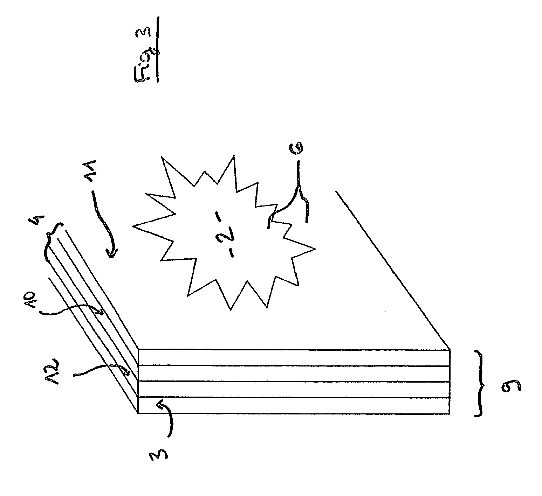

Selon l'invention, et tel que représenté sur la figure 3, le revêtement 4 comprend une couche de protection 12 apte à protéger le revêtement 4 de la couche de support 3 dans des conditions de mise en forme industrielles, telles qu'une température élevée.

Par exemple, la couche de protection pourra constituer une barrière contre la matière plastique constitutive de la couche de support 3, même en fusion.

La « barrière » constituée par la couche de protection n'est pas forcément totalement imperméable à la matière plastique constitutive de la couche de support 3, mais peut au contraire être perméable à cette matière sur une certaine épaisseur, assurant ainsi une adhésion entre le support 3 et le revêtement, et au-delà de cette épaisseur, empêcher la progression de la matière constitutive de la couche de support 3 vers la face visible du revêtement de façon à préserver le moelleux et l'aspect visible du revêtement.

En outre, la couche de protection est choisie avec une opacité lui permettant de laisser passer la lumière du dispositif d'éclairage 7 à travers elle ou de définir des motifs particuliers.

Grâce à cette caractéristique, il est possible de mettre en forme le corps principal 9 du panneau selon l'invention par un procédé industriel de moulage par injection, au cours duquel la matière plastique constitutive du support est injectée en fusion contre la couche de protection du revêtement, ou bien par un procédé industriel de thermocompression, au cours duquel la matière plastique constitutive du support à une température élevée est comprimée contre la couche de protection du revêtement.

Ainsi, le revêtement 4, protégé de la matière plastique du support en fusion ou à température élevée, par la couche de protection, conserve la forme, les propriétés esthétiques et de confort durant la fabrication industrielle.

Et du fait de la bonne conservation de la forme et des propriétés du revêtement, le motif réalisé sur la face visible du revêtement présente la forme désirée.

### 1. Support 3 moulé par injection sur revêtement en tissu, cuir ou autre 4

Selon un premier mode de réalisation du revêtement pourvu d'une couche de protection, celui-ci comprend, tel que représenté sur la figure 3, une couche d'aspect 11 qui porte la face visible 6 du panneau 1 et une couche de tissu fixée à l'envers de la couche d'aspect 11 et apte à protéger cette couche d'aspect 11 vis-à-vis de la matière plastique en fusion.

La couche de protection 12 est idéalement constituée d'un matériau non tissé ou d'une maille tricotée.

La couche de protection 12 peut avantageusement assurer la fonction de définition du motif visible par un utilisateur du véhicule.

En effet, cette couche de protection constituée d'un non tissé ou d'une maille peut être le siège d'une impression telle que la sublimation thermique ou une impression jet d'encre apportée sur l'envers de cette couche de protection pour définir des zones opaques et des zones laissant passer la lumière agencées selon le motif final désiré.

Selon une variante de réalisation, c'est sur la couche de support 3 que sont formées les zones opaques et les zones laissant passer la lumière. Dans ce cas, on peut peindre l'envers de la couche de support 3 avec une peinture opaque apportée sur les zones destinées à être opaques ou en collant un masque constitué d'un matériau ne laissant pas passer la lumière sur toutes les zones de l'envers de la couche de support 3 destinées à définir des zones opaques.

La couche d'aspect est un semi-transparent à transparent qui peut être constituée par un textile, du cuir ou autre, de différents coloris. Les variations dans la nature du revêtement et dans sa couleur entraînent bien entendu une modification de la lumière qui parvient aux yeux de l'utilisateur.

La fabrication d'un panneau pourvu d'un revêtement de ce type est la suivante.

La couche d'aspect 11, la couche de mousse 10 et la couche de protection 12 sont assemblées l'une à l'autre lors d'une étape préliminaire de contre-collage ou de flammage, le revêtement ainsi formé étant introduit dans la cavité d'un moule à injection.

La matière plastique constitutive de la couche de support en fusion est alors déversée sur l'envers de la couche de protection 12.

Une fois la matière plastique refroidie et la couche de support ainsi constituée, le moule est ouvert et le corps de panneau formé 9 est associé au dispositif d'éclairage tel que décrit ultérieurement.

### 2. Support 3 moulé par injection sur revêtement 4 plastique thermoformé

Selon un autre mode de réalisation du revêtement 4 à couche de protection contre la matière thermoplastique injectée, ce revêtement est constitué d'une feuille thermoplastique préalablement thermoformée transparente ou translucide qui est insérée dans le moule servant à la constitution de la couche de support 3 et qui présente des propriétés la rendant imperméable à la matière plastique constitutive de la couche de support 3.

Dans ce cas également, le revêtement sous forme de feuille thermoplastique peut comprendre des zones opaques et des zones laissant passer la lumière, obtenues par une opération d'impression réalisée sur l'envers et/ou l'endroit de ce revêtement, préalablement à l'injection de la matière plastique constitutive de la couche de support.

La fabrication d'un panneau pourvu d'un tel revêtement consiste à insérer la feuille thermoplastique préalablement thermoformée constitutive du revêtement au sein d'un moule, puis à injecter celle constituant la couche de support, pour former le corps du panneau 1.

Une fois ce corps de panneau refroidi, il est retiré du moule afin d'y fixer le dispositif à éclairage selon l'invention.

### 3. Support 3 et revêtement 4 associés l'un à l'autre par thermocompression

Selon un troisième procédé de fabrication du corps principal 9 du panneau d'habillage, le revêtement est constitué d'une couche d'aspect 11 définissant la face visible du panneau 1 éventuellement une couche de mousse conférant un toucher soft et une couche formant barrière vis-à-vis du matériau plastique de la couche de support, fixée à l'envers de la couche d'aspect, cette couche formant barrière constituant la couche de protection 12.

La couche de support est constituée de matériaux thermoplastiques sous forme de plaque ou sous forme de feutres composés de fibres thermoplastiques et de fibres de verres ou fibres naturelles.

Le revêtement 4 et la couche de support 3 sont assemblés l'un à l'autre au sein d'une presse après avoir été chauffés à des températures prédéterminées.

La couche de protection est constituée dans ce cas par un non-tissé ou une maille.

Une fois le support 3 et le revêtement 4 associés l'un à l'autre au sein de la presse, le dispositif d'éclairage est fixé sur l'envers de la couche de protection du revêtement.

Ce dispositif d'éclairage comprend un support 21 ou embase 21, constitué par exemple d'un circuit imprimé, et au moins une source lumineuse 22 telle qu'une diode électroluminescente 22, qui est fixée sur l'embase 21, et alimentée par une source de courant 23 telle que représentée sur la figure 2.

La fixation du circuit imprimé 21 portant les diodes 22 sur la couche de support 3 du corps 9 du panneau est assurée par l'intermédiaire d'un boîtier sensiblement parallélépipédique 24 et comprenant une paroi principale 26 disposée parallèlement à la couche de support 3 et une paroi latérale 27 dont un bord frontal 28 vient en appui sur l'envers 8 de la couche de support 3, le bord opposé venant en appui contre la paroi principale 26.

La paroi principale 26 du boîtier 24 sert de support au circuit imprimé qui y est fixé, avec la ou les diodes qu'il porte, dirigées vers l'envers de la couche de support 3.

Ce boîtier assure non seulement une fonction de support de la source lumineuse, mais également une fonction d'emprisonnement des rayons lumineux déviant de la trajectoire désirée.

En outre, lorsqu'il est constitué de mousse, il évite un alourdissement du panneau.

La nature des diodes 22 et la position du circuit imprimé 21 permettent de varier la lumière éclairant le corps 9 du panneau 1, en fonction de l'effet recherché.

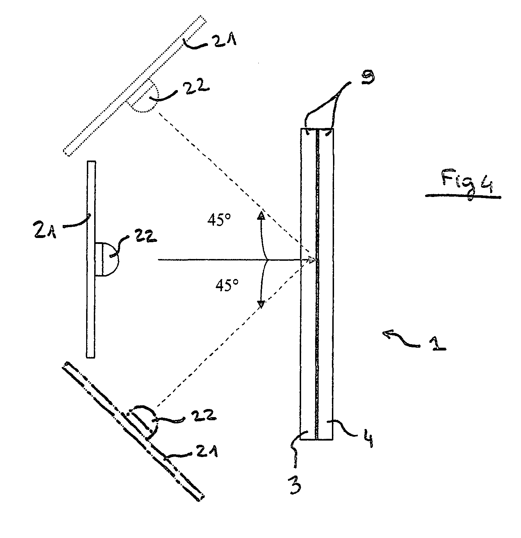

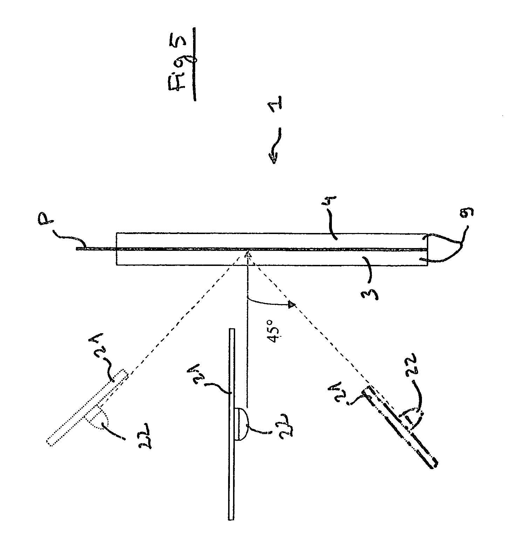

Selon les modes de réalisation des figures 4 et 5, les diodes et la position du circuit au sein du boîtier sont choisies pour que le faisceau lumineux issu des diodes traverse majoritairement le corps 9 du panneau.

Plus précisément, selon l'exemple représenté sur la figure 4, la diode est de nature à fournir un éclairage diffusant selon une direction normale au circuit imprimé 21 auquel elle est fixée.

Ce circuit 21 est fixé parallèlement à la couche de support 3 du corps 9 du panneau, telle que représentée en trait plein. Dans ce cas, la lumière traverse perpendiculairement le corps du panneau avec ainsi une intensité maximale.

Il est possible de dévier la position du circuit jusqu'à une inclinaison d'environ 45°, tout en assurant que la majorité du faisceau lumineux issu des diodes traverse le corps 9 du panneau dans son épaisseur.

Ainsi, selon la variante représentée en traits pointillés sur cette même figure 4, le circuit imprimé est orienté à 45° par rapport à sa position parallèle à la couche de support de sorte que le faisceau lumineux issu de la diode 22 traverse le corps 9 du panneau 1 selon une direction inclinée à 45° par rapport à la couche de support 3.

Il traverse ainsi le corps 9 du panneau 1 sur une distance plus importante que lorsque le circuit imprimé est parallèle à ce corps 9, ce dont résulte une intensité de lumière visible plus faible et tamisée.

Bien entendu, l'orientation du circuit à 45° par rapport au plan défini par le corps 9 du panneau 1 peut être choisie pour que le faisceau lumineux traverse le corps 9 de bas en haut comme c'est le cas de la variante représentée en traits interrompus, ou de haut en bas comme c'est le cas de la variante représentée en pointillés.

De même, toute orientation du flux lumineux comprise dans l'ouverture angulaire +45°/-45° représentée sur la figure 4, est envisageable.

Dans l'exemple représenté sur la figure 5, la diode 22 est de nature à diffuser une lumière parallèlement au circuit imprimé 21 auquel elle est fixée. Dans ce cas, pour que la majeure partie du faisceau lumineux traverse le corps 9 du panneau 1, le circuit imprimé 21 est fixé perpendiculairement au plan P que définit ce corps, tel que représenté en trait plein sur cette figure 5. Dans cette configuration, la lumière délivrée par la diode traverse le panneau dans son épaisseur sur la plus petite distance possible de façon à maximiser l'intensité de la lumière perçue par un utilisateur du véhicule.

Selon la variante de positionnement illustrée en traits interrompus sur cette figure 5, le circuit imprimé est orienté de 45° par rapport au plan défini par le corps 9 du panneau 1 et éclaire par sa diode 22 le corps 9 du panneau 1 de bas en haut, le flux lumineux délivré par la diode traversant le corps 9 du panneau avec une incidence de 45°. L'intensité perçue au sein de l'habitacle est ainsi moins importante que dans le cas précédent.

Selon la variante représentée en pointillés, le flux lumineux de la diode 22 traverse toujours le panneau avec une incidence de 45° mais cette fois depuis le haut du corps du panneau 1 jusque vers le bas de ce panneau, avec toujours une intensité perçue au sein de l'habitacle du véhicule moins importante que lorsque le circuit imprimé est perpendiculaire au plan du corps 9 du panneau 1.

Naturellement, toute autre orientation du flux lumineux, comprise dans l'ouverture angulaire +/- 45° est également envisageable.

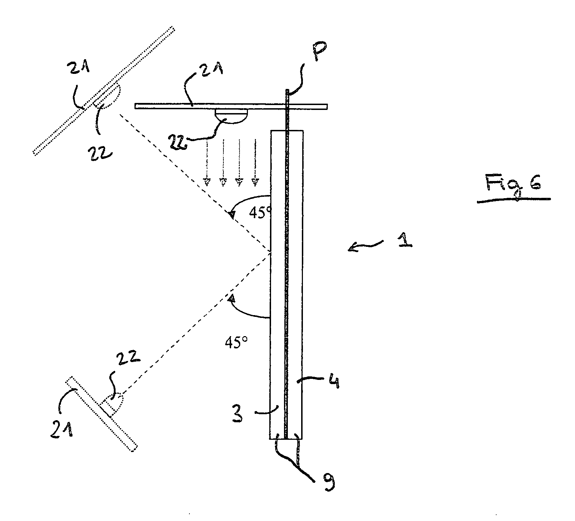

Au contraire, selon le mode de réalisation représenté sur la figure 6, on choisit la nature de la diode et la position du circuit imprimé, pour que la majeure partie du faisceau lumineux longe la couche de support 3, de façon à créer un éclairage diffus ou indirect, alors qu'une minorité de ce faisceau traverse le corps 9 du panneau 1.

Selon la variante de réalisation représentée, on a choisi une diode éclairant selon une direction normale au circuit 21 auquel elle est fixée et ce circuit est solidarisé au corps 9 du panneau 1 selon une direction perpendiculaire du plan P défini par ce corps 9.

Ainsi, l'éclairage de la diode 22 longe la face arrière du corps 9 du panneau 1 et définit un éclairage diffus éclairant le panneau de haut en bas.

Bien entendu, on peut disposer le circuit 21 dans la partie basse du corps 9 du panneau, toujours perpendiculairement à ce corps 9, pour que la diode 22 éclaire ce panneau de bas en haut sans traverser celui-ci.

De même, le circuit imprimé peut également être orienté de 0 à 45° par rapport au plan P du panneau 1 pour qu'une partie du faisceau lumineux traverse le corps 9 du panneau dans son épaisseur et intensifie la lumière perçue par l'utilisateur.

La fixation du circuit imprimé sur la paroi du boîtier peut être obtenue par un adhésif, une colle ou des liens de retenue.

Et la fixation du boîtier sur la couche de support peut être effectuée au moyen d'adhésif, de colle, de clips, le soudage ou tout autre moyen de fixation.

Selon une autre variante, le circuit imprimé peut être fixé directement sur le panneau.

L'invention telle que décrite ci-dessus présente différents avantages :
- la conception particulière du revêtement pourvu d'une couche de protection permet d'utiliser un procédé industriel tel que le moulage par injection pour former le corps principal du panneau, et augmenter ainsi la cadence de production,
- la simplicité du dispositif d'éclairage et la facilité de son intégration au sein du panneau d'habillage, éventuellement déjà existant, qui permettent de limiter les coûts de fabrication,
- la modification aisée du rétro éclairage de l'habitacle, soit en modifiant l'orientation d'une embase portant une diode, le nombre de dispositif d'éclairage, en modifiant le nombre de diode que chaque dispositif porte, leur couleur, leur intensité, pour obtenir un éclairage homogène, ou au contraire disparate, le circuit imprimé pouvant comporter tous les éléments électroniques permettant de piloter ces diodes de façon adéquate, ou encore en changeant les zones opaques et transparentes destinées à former des motifs
- le faible encombrement procuré par le dispositif de rétro éclairage.

## Revendications

1. Panneau d'habillage intérieur pour véhicule automobile pourvu d'une zone rétroéclairée, comprenant une couche de support rigide (3) et un revêtement (4) fixé sur la couche de support (3) et définissant par sa face libre, la face visible (6) du panneau (1), le panneau (1) comprenant un dispositif d'éclairage (7) apte à éclairer une zone de l'envers (8) de la couche de support, la couche de support (3) et le revêtement (4) étant aptes à laisser passer la lumière du dispositif d'éclairage (7) de façon à ce que des motifs soient formés sur la face visible (6) du panneau (1),
**caractérisé en ce que** la couche de support (3) est constituée en un matériau thermoplastique, et **en ce que** le revêtement (4) comprend une couche de protection(12) apte à protéger le revêtement de la couche de support 3 dans des conditions de mise en forme industrielles, telles qu'une température élevée.

2. Panneau selon la revendication 1, **caractérisé en ce que** le revêtement comprend une couche d'aspect (11) définissant la face visible du panneau (1) et une couche formant barrière vis à vis du matériau plastique de la couche de support, fixée à l'envers de la couche d'aspect, cette couche formant barrière constituant la couche de protection (12).

3. Panneau selon la revendication 2, **caractérisé en ce que** la couche de protection (12) comprend des zones opaques et des zones transparentes définissant les motifs formés sur la face visible (6) du revêtement (4).

4. Panneau selon la revendication 3, **caractérisé en ce que** les zones opaques sont formées sur l'envers de la couche de protection (12) par impression, telle que l'impression par sublimation thermique ou l'impression jet d'encre.

5. Panneau selon l'une des revendications 2 à 4, **caractérisé en ce que** la couche de protection (12) est un non tissé ou une maille.

6. Panneau selon la revendication 1, **caractérisé en ce que** le revêtement est constitué d'une feuille thermoplastique préalablement thermoformée, imperméable au matériau constitutif de la couche de support, définissant la couche de protection du revêtement.

7. Panneau selon l'une des revendications précédentes, **caractérisé en ce que** la couche de support (3) comprend des zones opaques et des zones transparentes définissant les motifs formés sur la face visible (6) du revêtement (4).

8. Panneau selon la revendication 7, **caractérisé en ce que** les zones opaques de la couche de support (3) sont formées par application d'une peinture sur l'envers de cette couche de support (3).

9. Panneau selon la revendication 7, **caractérisé en ce que** les zones opaques de la couche de support (3) sont formées par application d'un masque définissant des formes complémentaires des motifs à former, sur l'envers de la couche de support (3).

10. Panneau selon l'une des revendications précédentes, **caractérisé en ce que** le dispositif d'éclairage (7) comprend au moins une source lumineuse (22) fixée sur une embase (21), l'embase (21) étant disposée de façon à diriger la majeure partie du flux lumineux de la source (22) à travers la couche de support (3) ou le long de la couche de support (3).

11. Procédé de fabrication d'un panneau d'habillage intérieur pour véhicule automobile pourvu d'une zone rétroéclairée, comprenant une étape de fabrication d'un corps principal (9) pour le panneau, pourvu d'une couche de support rigide (3) et d'un revêtement (4) fixé sur la couche de support (3) et définissant par sa face libre, la face visible (6) du panneau (1), et une étape d'assemblage du dispositif d'éclairage (7) sur l'envers du corps principal (9), la couche de support (3) et le revêtement (4) étant aptes à laisser passer la lumière du dispositif d'éclairage (7) de façon à ce que des motifs soient formés sur la face visible (6) du revêtement (4),
**caractérisé en ce que** la couche de support (3) est constituée en un matériau thermoplastique, et **en ce que** le revêtement (4) comprend une couche de protection apte à protéger le revêtement de la couche de support 3 dans des conditions de mise en forme industrielles, telles qu'une température élevée, la fabrication du corps principal (9) étant effectuée par un assemblage à chaud de la couche de support (3) et du revêtement (4), tel que le moulage par injection ou la thermocompression.

12. Procédé selon la revendication 11, **caractérisé en ce que** la fabrication du revêtement comprend une étape d'assemblage d'une couche d'aspect (11) définissant la face visible du panneau (1) avec une couche formant barrière vis-à-vis du matériau plastique en fusion de la couche de support et constituant la couche de protection (12), telle qu'un non-tissé ou une maille, une étape d'introduction de ces couches assemblées au sein du moule à injection, et une étape d'injection de la matière thermoplastique constitutive de la couche de support (3) sur l'envers de la couche de protection (12) .

13. Procédé selon la revendication 11 ou 12, **caractérisé en ce que** la fabrication du revêtement comprend une étape de thermoformage d'un film thermoplastique au sein d'un premier moule apte à définir une couche d'aspect (11), et une étape d'injection d'une matière thermoplastique au sein d'un second moule apte à constituer la couche de support rigide (3).

14. Procédé selon l'une des revendications 11 à 13, **caractérisé en ce que** la fabrication du revêtement comprend une étape de formation de zones opaques sur le revêtement.

15. Procédé selon l'une des revendications 11 à 14, **caractérisé en ce que** la fabrication de la couche de support comprend une étape de formation de zones opaques sur la couche de support, et de préférence sur l'envers de cette couche.

## Claims

1. An internal cladding panel for a motor vehicle provided with a backlit area, comprising a rigid backing layer (3) and a coating (4) fastened to the backing layer (3) and defining by the free side thereof the visible side (6) of the panel (1), the panel (1) comprising a lighting device (7) capable of lighting an area from the backside (8) of the backing layer, the backing layer (3) and the coating (4) being capable of passing light from the lighting device (7) so that patterns are formed on the visible side (6) of the panel (1),
**characterized in that** the backing layer (3) consists of a thermoplastic material, and that the coating (4) comprises a protective layer (12) capable of protecting the coating of the backing layer (3) under industrial shaping conditions, such as at high temperature.

2. The panel according to claim 1, **characterized in that** the coating comprises a decorative layer (11) defining the visible side of the panel (1) and a barrier layer against the plastic material of the backing layer fastened to the backside of the decorative layer, said barrier layer being the protective layer (12).

3. The panel according to claim 2, **characterized in that** the protective layer (12) comprises opaque areas and transparent areas defining the patterns formed on the visible side (6) of the coating (4).

4. The panel according to claim 3, **characterized in that** the opaque areas are formed on the backside of the protective layer (12) by printing, such as thermal sublimation printing or inkjet printing.

5. The panel according to any of claims 2 to 4, **characterized in that** the protective layer (12) is a non-woven or mesh.

6. The panel according to claim 1, **characterized in that** the coating consists of a previously heat-formed thermoplastic film impervious to the material of the backing layer defining the protective layer of the coating.

7. The panel according to any of the preceding claims, **characterized in that** the backing layer (3) comprises opaque areas and transparent areas defining the patterns formed on the visible side (6) of the coating (4).

8. The panel according to claim 7, **characterized in that** the opaque areas of the backing layer (3) are formed by the application of paint to the backside of the backing layer (3).

9. The panel according to claim 7, **characterized in that** the opaque areas of the backing layer (3) are formed by the application of a mask defining complementary shapes of the patterns to be formed on the backside of the backing layer (3).

10. The panel according to any of the preceding claims, **characterized in that** the lighting device (7) comprises at least one light source (22) fastened to a holder (21), said holder (21) being arranged to as to direct most of the light flow of the source (22) through the backing layer (3) or along the backing layer (3).

11. A method for manufacturing an internal cladding panel for a motor vehicle provided with a backlit area, comprising a step of manufacturing a main body (9) for the panel, provided with a rigid backing layer (3) and a coating (4) fastened to the backing layer (3) and defining by the free side thereof the visible side (6) of the panel (1), and a step of assembling the lighting device (7) on the backside of the main body (9), said backing layer (3) and the coating (4) being capable of passing light from the lighting device (7) so that patterns are formed on the visible side (6) of the coating (4),
**characterized in that** the backing layer (3) consists of thermoplastic material, and that the coating (4) comprises a protective layer capable of protecting the coating of the backing layer (3) under industrial shaping conditions, such as at high temperature, with manufacturing of the main body (9) being performed by hot assembly of the backing layer (3) and the coating (4), such as injection molding or thermocompression.

12. The method according to claim 11, **characterized in that** the manufacturing of the coating comprises a step of assembling a decorative layer (11) defining the visible side of the panel (1) with a barrier layer against the molten plastic material of the backing layer and forming the protective layer (12), such as a non-woven or mesh, a step of introducing said assembled layers into the injection mold, and a step of injecting the thermoplastic material composing the backing layer (3) on the backside of the protective layer (12).

13. The method according to claim 11 or 12, **characterized in that** the manufacturing of the coating comprises a step of heat forming a thermoplastic film into a first mold capable of defining a decorative layer (11), and a step of injecting a thermoplastic material into a second mold capable of composing the rigid backing layer (3).

14. The method according to any of claims 11 to 13, **characterized in that** manufacturing of the coating comprises a step of forming opaque areas on the coating.

15. The method according to any of claims 11 to 14, **characterized in that** manufacturing of the backing layer comprises a step of forming opaque areas on the backing layer and preferably on the backside of said layer.

## Patentansprüche

1. Innenverkleidungspaneel für Kraftfahrzeuge, das mit einem von hinten beleuchteten Bereich versehen ist, umfassend eine starre Trägerschicht (3) und einen Überzug (4), der an der Trägerschicht (3) befestigt ist und durch seine freie Seite die sichtbare Seite (6) des Paneels (1) definiert, wobei das Paneel (1) eine Beleuchtungsvorrichtung (7) umfasst, die dazu geeignet ist, einen Bereich von der Rückseite (8) der Trägerschicht aus zu beleuchten, wobei die Trägerschicht (3) und der Überzug (4) dazu geeignet sind, das Licht von der Beleuchtungsvorrichtung (7) durchzulassen, so dass sich auf der sichtbaren Seite (6) des Paneels (1) Muster bilden,
**dadurch gekennzeichnet, dass** die Trägerschicht (3) aus einem thermoplastischen Material besteht, und dass der Überzug (4) eine Deckschicht (12) umfasst, die dazu geeignet ist, um den Überzug der Trägerschicht (3) unter industriellen Formgebungsbedingungen, wie etwa auf hohen Temperaturen, zu schützen.

2. Paneel nach Anspruch 1, **dadurch gekennzeichnet, dass** der Überzug eine Dekorschicht (11), welche die sichtbare Seite des Paneels (1) definiert, und eine Sperrschicht gegenüber dem Plastikmaterial der Trägerschicht umfasst, die an der Rückseite der Dekorschicht befestigt ist, wobei diese Sperrschicht die Deckschicht (12) ist.

3. Paneel nach Anspruch 2, **dadurch gekennzeichnet, dass** die Deckschicht (12) undurchsichtige Bereiche und durchsichtige Bereiche umfasst, welche die Muster definieren, die auf der sichtbaren Seite (6) des Überzugs (4) gebildet werden.

4. Paneel nach Anspruch 3, **dadurch gekennzeichnet, dass** die undurchsichtigen Bereiche auf der Rückseite der Deckschicht (12) durch Drucken, wie etwa Thermosublimationsdrucken oder Tintenstrahldrucken, gebildet werden.

5. Paneel nach einem der Ansprüche 2 bis 4, **dadurch gekennzeichnet, dass** die Deckschicht (12) ein Vliesstoff oder ein Maschenwerk ist.

6. Paneel nach Anspruch 1, **dadurch gekennzeichnet, dass** der Überzug aus einer zuvor warmgeformten thermoplastischen Folie besteht, die für das Material der Trägerschicht undurchlässig ist, das die Deckschicht des Überzugs definiert.

7. Paneel nach einem der vorhergehenden Ansprüche, **dadurch gekennzeichnet, dass** die Trägerschicht (3) undurchsichtige Bereiche und durchsichtige Bereiche umfasst, welche die Muster definieren, die auf der sichtbaren Seite (6) des Überzugs (4) gebildet werden.

8. Paneel nach Anspruch 7, **dadurch gekennzeichnet, dass** die undurchsichtigen Bereiche der Trägerschicht (3) durch das Auftragen eines Lacks auf der Rückseite dieser Trägerschicht (3) gebildet werden.

9. Paneel nach Anspruch 7, **dadurch gekennzeichnet, dass** die undurchsichtigen Bereiche der Trägerschicht (3) durch das Auftragen einer Maske gebildet werden, die ergänzende Formen zu den zu bildenden Mustern auf der Rückseite der Trägerschicht (3) definiert.

10. Paneel nach einem der vorhergehenden Ansprüche, **dadurch gekennzeichnet, dass** die Beleuchtungsvorrichtung (7) mindestens eine Lichtquelle (22) umfasst, die an einer Fassung (21) befestigt ist, wobei die Fassung (21) angeordnet ist, um einen Großteil des Lichtflusses der Quelle (22) durch die Trägerschicht (3) oder an der Trägerschicht (3) entlang zu leiten.

11. Verfahren zum Herstellen eines Innenverkleidungspaneels für Kraftfahrzeuge, das mit einem von hinten beleuchteten Bereich versehen ist, umfassend einen Schritt des Herstellens eines Hauptkörpers (9) für das Paneel, der mit einer starren Trägerschicht (3) und einem Überzug (4), der an der Trägerschicht (3) befestigt ist, versehen ist und durch seine freie Seite die sichtbare Seite (6) des Paneels (1) definiert, und einen Schritt des Zusammenfügens der Beleuchtungsvorrichtung (7) auf der Rückseite des Hauptkörpers (9), wobei die Trägerschicht (3) und der Überzug (4) dazu geeignet sind, um Licht von der Beleuchtungsvorrichtung (7) durchzulassen, so dass sich auf der sichtbaren Seite (6) des Überzugs (4) Muster bilden,
**dadurch gekennzeichnet, dass** die Trägerschicht (3) aus einem thermoplastischen Material besteht, und dass der Überzug (4) eine Deckschicht umfasst, die dazu geeignet ist, den Überzug der Trägerschicht (3) unter industriellen Formgebungsbedingungen, wie etwa auf hohen Temperaturen, zu schützen, wobei das Herstellen des Hauptkörpers (9) durch Warmfügen der Trägerschicht (3) und des Überzugs (4), wie etwa durch Spritzgießen oder Thermokompression, erfolgt.

12. Verfahren nach Anspruch 11, **dadurch gekennzeichnet, dass** das Herstellen des Überzugs einen Schritt des Zusammenfügens einer Dekorschicht (11), welche die sichtbare Seite des Paneels (1) definiert, mit einer Sperrschicht gegenüber dem geschmolzenen Plastikmaterial der Trägerschicht und welche die Deckschicht (12) bildet, wie etwa ein Vliesstoff oder ein Maschenwerk, einen Schritt des Einführens dieser zusammengefügten Lagen in die Spritzform und einen Schritt des Einspritzens des thermoplastischen Materials, das die Trägerschicht (3) auf der Rückseite der Deckschicht (12) bildet, umfasst.

13. Verfahren nach Anspruch 11 oder 12, **dadurch gekennzeichnet, dass** das Herstellen des Überzugs einen Schritt des Warmformens einer thermoplastischen Folie in einer ersten Form, die dazu geeignet ist, um eine Dekorschicht (11) zu definieren, und einen Schritt des Einspritzens eines thermoplastischen Materials in eine zweite Form, die dazu geeignet ist, die starre Trägerschicht (3) zu bilden, umfasst.

14. Verfahren nach einem der Ansprüche 11 bis 13, **dadurch gekennzeichnet, dass** das Herstellen des Überzugs einen Schritt des Bildens von undurchsichtigen Bereichen auf dem Überzug umfasst.

15. Verfahren nach einem der Ansprüche 11 bis 14, **dadurch gekennzeichnet, dass** das Herstellen der Trägerschicht einen Schritt des Bildens von undurchsichtigen Bereichen auf der Trägerschicht und bevorzugt auf der Rückseite dieser Schicht umfasst.
